Europäisches Patentamt

European Patent Office

Office européen des brevets

(11) Numéro de publication: **0 521 773 B1**

## FASCICULE DE BREVET EUROPEEN

(45) Date de publication de fascicule du brevet: **01.02.95**  (51) Int. Cl.⁶: **B29C  49/64**

(21) Numéro de dépôt: **92401860.9**

(22) Date de dépôt: **30.06.92**

(54) **Procédé et installation pour le chauffage, par rayonnement infrarouge, de préformes en matière plastique, notamment en PET, destinées à la fabrication de récipients.**

(30) Priorité: **01.07.91 FR 9108158**

(43) Date de publication de la demande:
**07.01.93 Bulletin  93/01**

(45) Mention de la délivrance du brevet:
**01.02.95 Bulletin  95/05**

(84) Etats contractants désignés:
**AT BE CH DE DK ES GB GR IT LI LU NL SE**

(56) Documents cités:
**EP-A- 0 251 066
DE-A- 3 823 670
US-A- 4 153 667
US-A- 4 571 173**

(73) Titulaire: **SIDEL, Société Anonyme
55, rue du Pont VI
F- 76053 Le Havre Cedex (FR)**

(72) Inventeur: **Denis, Gérard
22, rue Georges Pompidou
F-76280 Turretot (FR)**
Inventeur: **Hudebine, René
11, rue Babeuf
F-76620 Le Havre (FR)**

(74) Mandataire: **Gorree, Jean-Michel
Cabinet Plasseraud
84, rue d'Amsterdam
F-75009 Paris (FR)**

## Description

La présente invention concerne, d'une façon générale, le chauffage, au moyen de rayonnement infrarouge, de préformes à paroi relativement épaisse en matière plastique, notamment en polyéthylènetéréphtalate (PET), destinées à la fabrication par soufflage ou étirage-soufflage de récipients tels que des bouteilles, flacons ou analogues.

L'invention concerne plus particulièrement des perfectionnements apportés aux procédés et aux installations permettant d'assurer un tel chauffage.

Selon la technique actuelle, les préformes sont chauffées dans des fours à défilement équipés de lampes à rayonnement infrarouge disposées le long de la trajectoire suivie par les préformes, lesquelles peuvent en outre être soumises à une rotation sur elles-mêmes autour de leur axe longitudinal pour être chauffées de façon uniforme. Les préformes sont donc chauffées uniquement par l'extérieur et, compte tenu de l'épaisseur relativement importante de leur paroi, il en résulte la formation d'un gradient de température de valeur notable entre les faces externe et interne de la paroi, la face interne étant sensiblement moins chaude que la face externe.

Or, lors du processus de soufflage ou d'étirage-soufflage qui, à partir de la préforme chauffée, conduit à un récipient à paroi mince, le taux d'étirage est différent pour la face interne et pour la face externe de la paroi de la préforme, la face interne ayant le taux d'étirage le plus élevé. Pour fixer les idées, dans le cas d'un récipient cylindrique de 80 mm de diamètre soufflé à partir d'une préforme ayant un diamètre intérieur de 12 mm et un diamètre extérieur de 20 mm, le taux d'étirage transverse (égal au rapport du diamètre final au diamètre initial) varie de 6,6 pour la face interne du cylindre à 4 pour sa face externe. Or, bien que la face interne soit la plus déformée, c'est elle qui, compte tenu des processus de chauffage employés, est la moins chaude. Il en résulte la possibilité d'occurence d'incidents (décollement des couches interne et externe de la paroi) qui ont d'autant plus de chances de se produire que l'épaisseur de la paroi est grande.

En outre, ce problème prend une acuité encore plus grande avec les bouteilles flacons ou analogues réutilisables, car les contraintes physico-chimiques entraînées par les opérations de nettoyage entre deux utilisations successives impliquent des épaisseurs sensiblement accrues (par exemple de l'ordre de 0,8 mm) pour la paroi des récipients, ce qui conduit à une épaisseur de l'ordre de 4 à 8 mm pour la paroi des préformes.

Une solution pourrait consister à modifier les conditions de chauffage de manière que la face interne des préformes parvienne à une température suffisante. Toutefois, cette solution entraînerait cet inconvénient majeur que la face externe risquerait alors d'être portée à une température excessive susceptible de provoquer une modification indésirable des caractéristiques physico-chimiques de la matière plastique. On a certes tenté d'atténuer cette difficulté en prévoyant des moyens de chauffage agencés pour homogénéiser approximativement la température sur toute l'épaisseur de la paroi. Mais cela ne suffit pas à résoudre les problèmes associés aux taux d'étirage différents sur les faces interne et externe de la paroi de la préforme et à éviter les risques d'incidents qui en découlent.

Par ailleurs, un relèvement des températures se traduit par une consommation d'énergie électrique accrue et/ou par une durée accrue d'exposition des préformes, et donc par un ralentissement de la cadence de production. A tout le moins, il en résulte une élévation des coûts de fabrication qui n'est pas admissible.

DE-A-38 23 670 décrit un procédé et installation selon les préambules des revendications indépendantes

L'invention a donc essentiellement pour but de proposer une solution originale au chauffage des préformes qui permette d'éviter les difficultés rencontrées jusqu'à présent, même dans le cas de préformes à paroi très épaisse telles que celles qu'il est prévu d'utiliser pour la fabrication de bouteilles, flacons ou analogues en PET, de type réutilisable, et cela sans augmentation du temps de traitement et sans accroissement de la consommation d'énergie électrique, voire avec une diminution sensible de cette consommation.

A ces fins, selon un premier aspect de l'invention, il est proposé un procédé pour le chauffage de préformes à paroi relativement épaisse en matière plastique, notamment en polyéthylènetéréphtalate (PET), destinées à la fabrication par soufflage ou étirage-soufflage de récipients tels que des bouteilles, flacons ou analogues, ledit chauffage consistant en une irradiations des préformes par rayonnement infrarouge émis par au moins une source extérieure aux préformes pour chauffer celles-ci sensiblement transversalement à leur axe longitudinal, ledit rayonnement infrarouge comprenant une première bande $B_1$ de longueurs d'onde qui est absorbée par la matière plastique constitutive de la paroi des préformes et une seconde bande $B_2$, distincte de la première bande $B_1$, de longueurs d'onde qui n'est pas absorbée par la matière plastique et qui parvient dans le volume intérieur des préformes, lequel procédé, étant conçu conformément à l'invention, se caractérise essentiellement :

- en ce que, dans le volume intérieur des préformes, on modifie les longueurs d'onde, situées dans la seconde bande $B_2$, du rayon-

nement infrarouge qui parvient dans ledit volume intérieur pour le transformer en rayonnement compris dans la première bande $B_1$,

- en ce qu'on réémet le rayonnement infrarouge à longueurs d'onde modifiées en direction de la paroi de la préforme,
- et en ce que ledit rayonnement infrarouge à longueurs d'onde modifiées, étant absorbé par la matière plastique constitutive de la paroi de la préforme au voisinage de la surface interne de celle-ci, chauffe la matière plastique au voisinage de ladite surface interne de manière telle que la température $T_i$ de la face interne de la paroi de la préforme soit supérieure à la température $T_e$ de la face externe de ladite paroi.

Grâce aux dispositions de l'invention, la préforme est chauffée dans des conditions idéales en vue des opérations qu'elle doit ultérieurement subir, c'est-à-dire que, d'une part, le deux faces, externe et interne, de sa paroi sont chauffées, conduisant ainsi à une élévation de température au moins de l'ensemble du matériau, et que, d'autre part, on crée un gradient de température décroissant de la face interne vers la face externe (c'est-à-dire inverse du gradient de température décroissant de la face externe vers la face interne que l'on rencontre dans les processus traditionnels de chauffage uniquement externe à la préforme) qui est parfaitement en concordance avec la différence des taux d'étirage subis par lesdites faces lors de l'opération subséquente de soufflage ou d'étirage-soufflage : on facilite ainsi la déformation du matériau lors de la formation du récipient et on évite le décollement de couches de matériau les unes des autres.

On notera également qu'il en résulte une utilisation améliorée de l'énergie délivrée par les moyens de chauffage puisque le rayonnement, qui a pénétré jusqu'à l'intérieur de la préforme et qui jusqu'à présent était perdu, est désormais mis à contribution pour le chauffage du matériau. Il en résulte, pour l'obtention d'une température donnée du matériau, une diminution du temps de chauffage qui peut s'évaluer à plus de 30 %, une diminution notable de l'énergie électrique consommée et la possibilité de réaliser des fours de chauffage moins longs dans les installations de chauffage au défilé, d'où une économie substantielle sur le coût de ces installations.

De façon pratique, la conversion des longueurs d'onde du rayonnement parvenant dans le volume intérieur des préformes et la réémission du rayonnement à longueurs d'onde modifiées sont obtenus en introduisant dans ledit volume intérieur un noyau. Ce dernier est dimensionné pour que l'espace entre la surface du noyau et la paroi interne de la préforme soit tel que la température Ti de la surface interne de la préforme, due à l'absorption du rayonnement réémis par le noyau au voisinage de ladite surface interne, soit supérieur à la température Te de la surface externe de la préforme. Des essais ont en effet montré que plus l'espace entre la surface du noyau et la paroi interne de la préforme est réduit, plus l'échauffement de cette dernière est important.

Dans le cas où l'on souhaite mettre en oeuvre le procédé de l'invention de manière que le profil en température de la paroi des préformes ne soit pas uniforme longitudinalement et/ou angulairement (en tournant autour de l'axe de la préforme), il est possible que ce profil de température non uniforme soit obtenu en prévoyant un espace non régulier entre le noyau et la paroi interne de la préforme et/ou en prévoyant un traitement de surface non régulier du noyau. En particulier, on peut prévoir que le noyau ait une surface présentant une brillance et/ou une couleur non régulière. En effet, des essais ont montré qu'un noyau brillant était moins apte qu'un noyau noir et mat pour convertir les longueurs d'ondes qui lui parviennent en surface et à réémettre le rayonnement modifié. La même chose a été mise en évidence avec des noyaux de couleurs différentes mais dans des proportions différentes. Ainsi, il est possible de mettre en oeuvre le procédé de l'invention pour fabriquer des récipients de formes complexes dont le processus de fabrication implique des déformations non homogènes de l'ensemble du matériau, ce qui s'accompagne d'un chauffage non homogène des préformes.

Selon un second aspect de l'invention, il est proposé une installation pour le chauffage de préformes à paroi relativement épaisse en matière plastique, notamment en polyéthylènetéréphtalate (PET), destinées à la fabrication par soufflage ou étirage-soufflage de récipients tels que des bouteilles, flacons ou analogues, ladite installation comportant des moyens de chauffage incluant au moins une source de rayonnement infrarouge située extérieurement aux préformes pour chauffer celles-ci sensiblement transversalement à leur axe longitudinal, lesdit rayonnement infrarouges comprenant une première bande $B_1$ de longueurs d'onde qui est absorbée par la matière plastique constitutive de la paroi des préformes et une seconde bande $B_2$, distincte de la première bande $B_1$, de longueurs d'onde qui n'est pas absorbée par la matière plastique et qui parvient dans le volume intérieur des préformes, installation qui, étant agencée conformément à l'invention, se caractérise essentiellement en ce qu'elle comporte :

- des moyens convertisseurs de longueurs d'onde de rayonnement infrarouge disposés à l'intérieur des préformes et agencés pour convertir le rayonnement infrarouge ayant des longueurs d'onde comprises dans la se-

conde bande $B_2$ en un rayonnement infrarouge ayant des longueurs d'onde comprises dans la première bande $B_1$, et

- des moyens réémetteurs pour réémettre ledit rayonnement infrarouge à longueurs d'onde modifiées en direction de la paroi des préformes,
- ces moyens convertisseurs et réémetteurs étant en outre agencés de manière telle que la température $T_i$ de la face interne de la paroi des préformes soit supérieure à la température de la face externe de ladite paroi.

De préférence, les moyens convertisseurs des longueurs d'onde du rayonnement infrarouge à l'intérieur des préformes et les moyens réémetteurs du rayonnement à longueurs d'onde modifiées sont mutuellement combinés et comprennent un noyau introduit dans chaque préforme et ayant une surface traitée, en laissant subsister avec la paroi interne de la préforme un espace tel que la température $T_i$ de la face interne de la paroi obtenue par échauffement de la matière plastique ayant absorbé le rayonnement infrarouge réémis par le noyau avec une longueur d'onde modifiée soit supérieure à la température $T_e$ de la face externe de la paroi.

Pour obtenir un chauffage non homogène longitudinalement et/ou angulairement de la préforme en vue notamment de faciliter la fabrication de récipients de formes complexes, on peut prévoir que la surface du noyau ne soit pas en tout point parallèle à la surface interne de la paroi de la préforme de manière telle que l'espace existant entre lesdites surfaces soit irrégulier longitudinalement et/ou angulairement (en tournant autour de l'axe longitudinal de la préforme) et/ou que la surface du noyau présente un traitement de surface non régulier longitudinalement et/ou angulairement (en tournant autour de son axe longitudinal) ; dans ce dernier cas, on peut faire en sorte que le noyau ait une surface présentant une brillance et/ou une couleur non régulière.

Il est souhaitable que les susdits espace et traitement de surface soient tels que l'écart des températures $T_i$ et $T_e$ respectivement des surfaces interne et externe de la paroi des préformes soit d'au moins + 5°C.

L'invention sera mieux comprise à la lecture de la description détaillée qui suit de certains modes de réalisation donnés uniquement à titre d'exemples non limitatifs. Dans cette description, on se réfère aux dessins annexés sur lesquels :

- la figure 1 est une vue en coupe illustrant un agencement d'installation de chauffage de préforme conforme à l'invention ;
- la figure 2 est un diagramme, à échelle très agrandie, illustrant le fonctionnement de l'agencement de la figure 1 ;

- les figures 3 et 4 sont des courbes illustrant respectivement la transmittance du PET et la profondeur de pénétration du rayonnement infrarouge dans le PET en fonction de la longueur d'onde ;
- la figure 5 est une variante de réalisation de l'agencement de la figure 1 ; et
- les figures 6A, 6B et 6C sont des vues en coupe transversale, selon les lignes AA, BB et CC respectivement, du noyau de la figure 5.

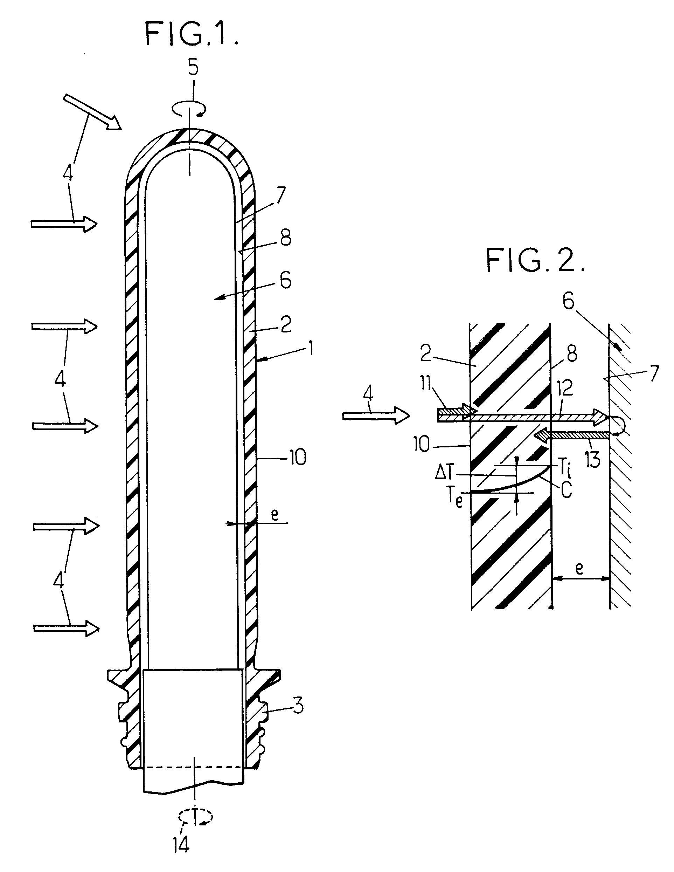

En se référant tout d'abord à la figure 1, la référence 1 désigne d'une façon générale une préforme à paroi relativement épaisse en matière plastique, notamment en polyéthylènetéréphtalate (PET), destinée à la fabrication par soufflage ou étirage-soufflage d'un récipient tel qu'une bouteille, un flacon ou analogue. La préforme 1, obtenue par exemple par moulage par injection, présente un corps 2 à paroi épaisse équipé d'un embout 3 constituant le col du futur récipient avec sa forme et ses dimensions définitives.

L'étape de soufflage ou d'étirage-soufflage destinée à la formation du récipient est précédée d'une étape de chauffage de la préforme 1 destinée à ramollir la matière plastique, et notamment le PET, pour faciliter la déformation mécanique subséquente dûe au soufflage ou à l'étirage-soufflage. L'étape de chauffage s'effectue dans un four, notamment un four à défilement, dont seuls sont montrés sur la figure 1 les éléments nécessaires à la compréhension de l'invention. Le four comprend une rangée de lampes à infrarouge (schématisées par des flèches 4 sur la figure 1) disposées le long de la trajectoire (ici perpendiculaire au plan de dessin) suivie par la préforme devant être chauffée et qui émettent un rayonnement infrarouge en direction du corps 2 de la préforme et sensiblement transversalement à celui-ci. Un chauffage uniforme du corps 2 est obtenu, avec une seule rangée unilatérale de lampes de chauffage, en faisant tourner la préforme sur elle-même (flèche 5) en même temps qu'elle est déplacée longitudinalement dans le four. Un réflecteur (non représenté) peut être disposé en regard des lampes, de l'autre côté de la trajectoire suivie par les préformes (à droite des préformes sur la fig. 1).

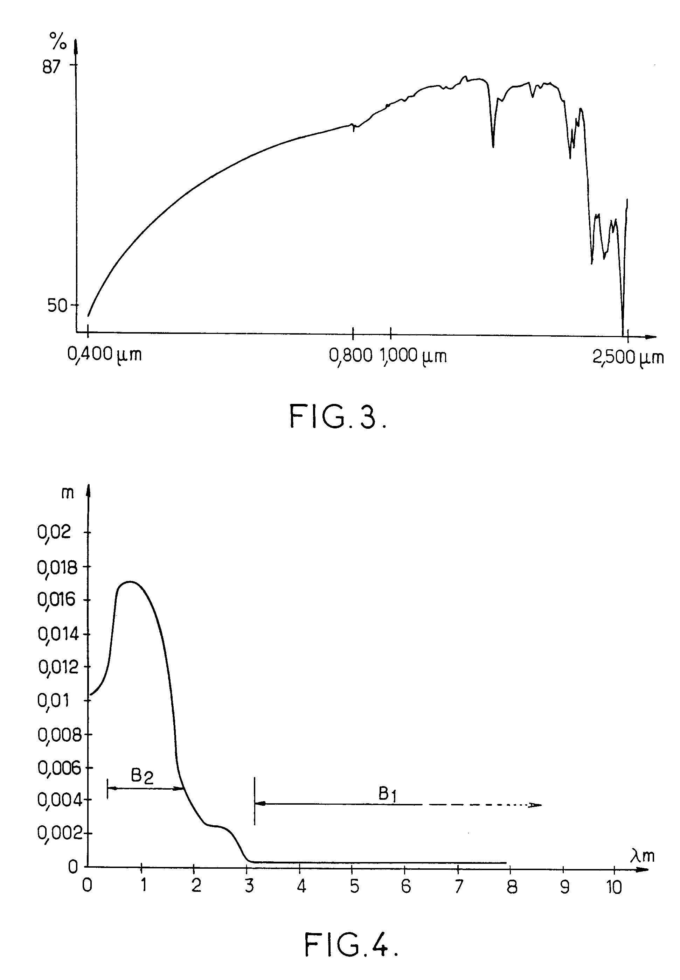

Les lampes à rayonnement infrarouge couramment utilisées dans les fours pour le chauffage des préformes ont un spectre d'émission compris entre environ 0,35 et 6 microns. La matière plastique constitutive de la préforme a une transmittance qui varie avec la longueur d'onde du rayonnement. Pour fixer les idées, on a représenté à la figure 3 la variation de la transmission (en %) d'un film de PET de 50 $\mu$m d'épaisseur pour des longueurs d'onde comprises entre 0,4 $\mu$m et 2,5 $\mu$m ; à la figure 4 on a représenté la variation de la profondeur (en mètres) de pénétration du rayonnement infrarouge dans le PET en fonction de la longueur d'onde (la profondeur de pénétration étant la distance pour laquelle I/Io = e$^{-1}$, I étant l'intensité du rayonnement à la profondeur considérée et Io l'intensité initiale).

On constate d'après ces courbes et en particulier d'après celles de la figure 4, que la partie du rayonnement émis par les lampes de chauffage dont les longueurs d'onde sont situées dans une première bande B1 (approximativement $\lambda > 3$ $\mu$m pour le PET) est absorbée par la matière plastique constitutive de la paroi de la préforme, tandis que la partie du rayonnement dont les longueurs d'onde sont situées dans une seconde bande B2, distincte de la bande B1 (approximativement $0,5$ $\mu$m $> \lambda > 1,6$ $\mu$m pour le PET) n'est pas notablement absorbée par la matière plastique et parvient dans le volume intérieur de la préforme.

Conformément à l'invention, on prévoit de convertir les longueurs d'onde, situées dans la bande B$_2$ précitée, du rayonnement parvenant dans le volume intérieur de la préforme pour le transformer en rayonnement dont les longueurs d'onde comprises dans la bande B$_1$ précitée et ensuite de réémettre ce rayonnement à longueurs d'onde modifiées en direction de la paroi de la préforme en faisant en sorte que l'échauffement au voisinage de la face interne de la préforme (échauffement consécutif à l'absorption du rayonnement réémis à longueurs d'onde modifiées) soit plus important que l'échauffement au voisinage de la face externe de la préforme (échauffement consécutif à l'absorption des rayonnements en provenance directe des lampes de chauffage).

A cette fin, on introduit à l'intérieur de la préforme un noyau 6 qui possède une surface 7 traitée en tout ou partie et qui laisse subsister avec la faceinterne 8 de la paroi 2 de la préforme un espace e.

A partir du rayonnement émis par les lampes de chauffage (flèche 4), une fraction (flèche 11) de ce rayonnement dont les longueurs d'ondes sont situées dans la bande B$_1$ est absorbée par le matériau plastique constitutif de la paroi et échauffe celui-ci au voisinage de la face externe 10 (température Te). La fraction (flèche 12) de ce rayonnement dont les longueurs d'ondes sont situées dans la bande B$_2$ n'est pas absorbée par le matériau plastique et parvient à l'intérieur de la préforme sur le noyau 6 dont le traitement de surface fait qu'il se comporte plus ou moins comme un corps noir et s'échauffe à une température T. Il en résulte que le noyau 6 émet à son tour (loi de Wien) un rayonnement ayant une longueur d'ondes maximale $\lambda_{max} = 2898/T$ ($\lambda_{max}$ en $\mu$m et T en $^\circ$K) en direction de la paroi de la préforme (flèche 13).

En adaptant en conséquence l'état de surface du noyau 6, on peut faire en sorte que sa température T soit telle que les longueurs d'onde du rayonnement réémis soient situées dans la bande B$_1$ ; il en résulte que le rayonnement réémis (flèche 13) est absorbé par le matériau plastique constitutif de la paroi de la préforme et échauffe celui-ci au voisinage de la face interne 8 (température T$_i$). Ainsi la paroi de la préforme est échauffée à la fois par sa face interne et par sa face externe, alors que la source de chauffage n'est en rien modifiée et demeure extérieure à la préforme dans une configuration unilatérale.

En outre, un choix approprié de l'état de surface de la face 7 du noyau 6 et de l'espace e peut permettre de porter la face interne 8 de la paroi de la préforme à une température T$_i$ qui soit significativement supérieure (en pratique d'au moins $5\,^\circ$C) à la température T$_e$ de la face externe 10 de cette même paroi ; on engendre ainsi un gradient positif de température $\Delta T = T_i - T_e$ ($T_i > T_e$) entre les faces interne 8 et externe 10 ; sur la figure 2, la courbe C représente un exemple possible de variation de la température dans l'épaisseur de la paroi, entre T$_i$ et T$_e$. On est ainsi assuré que le matériau plastique présente localement les températures appropriées pour supporter sans risques les taux d'étirage qu'il va subir au cours du processus de soufflage ou d'étirage-soufflage.

Plus l'espace e est faible, plus l'énergie réémise par le noyau et parvenant sur la face interne 8 est élevée, plus la température T$_i$ est élevée, et donc plus l'écart de température $T_i - T_e$ est grand.

Pour une valeur donnée de l'espace e, un noyau à surface noir mat provoque un chauffage de la face interne plus important qu'un noyau à surface claire et brillante. Dans le premier cas, la température T$_i$ peut être supérieure de $20\,^\circ$C à la température T$_e$, alors qu'elle ne le sera que de $10\,^\circ$C dans le second cas.

Compte tenu de l'influence remarquable de ces paramètres, il apparaît clairement que l'on peut moduler le chauffage de la préforme par zones, longitudinalement aussi bien qu'angulairement (en tournant autour de l'axe de la préforme), en ajustant en correspondance l'état de la surface et/ou l'espace e de certaines zones du noyau. En particulier, il est ainsi possible de moduler l'échauffement de la préforme par zones pour faciliter la fabrication de récipients de formes complexes et/ou présentant une épaisseur variable.

A la figure 1, le noyau 6 présente une forme simple qui correspond sensiblement à la forme de la face interne de la préforme, de telle sorte que l'espace e est approximativement constant.

Au cours du chauffage, le noyau 6 peut être entraîné en rotation (flèche 14) sur lui-même en synchronisme avec la préforme 1, ou bien au contraire ne pas être entraîné, la préforme 1 tournant seule autour du noyau.

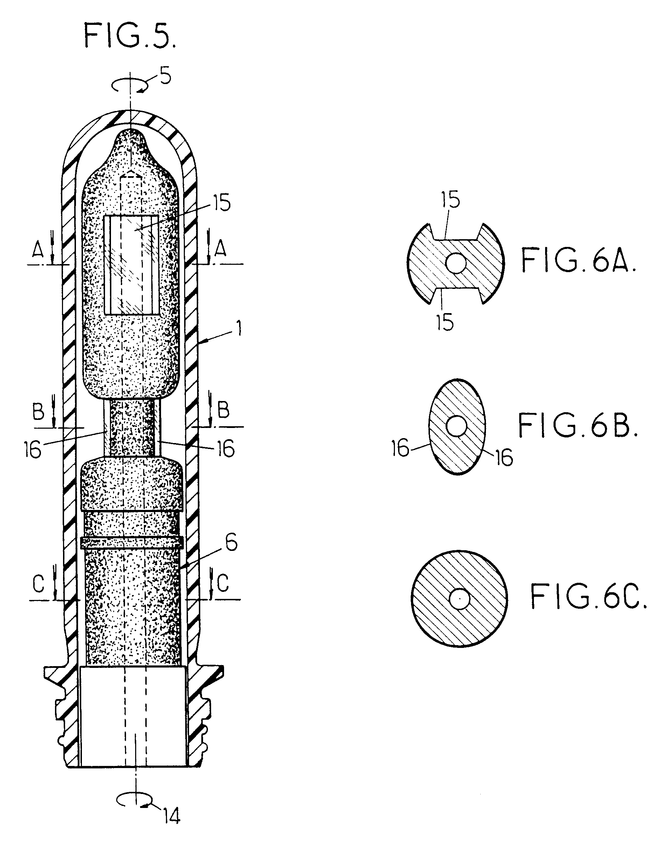

A la figure 5 est représenté un noyau 6 ayant une forme complexe montrée à titre d'exemple, avec un espace e non constant aussi bien longitudinalement qu'angulairement et dont certaines zones (en blanc sur le dessin, telles que les zones 15 et 16) sont brillantes (métal poli par exemple) alors que le reste du noyau est de couleur sombre (noir mat par exemple). Les figures 6A, 6B et 6C sont des coupes selon les lignes AA, BB et CC, respectivement de la figure 5 et montrent les formes de diverses sections du noyau. Dans un tel cas, le noyau doit tourner sur lui-même en synchronisme avec la préforme.

Comme il va de soi et comme il résulte d'ailleurs déjà de ce qui précède, l'invention ne se limite nullement à ceux de ses modes d'application et de réalisation qui ont été plus particulièrement envisagés ; elle en embrasse, au contraire, toutes les variantes.

## Revendications

1. Procédé pour le chauffage de préformes à paroi relativement épaisse en matière plastique, notamment en polyéthylènetéréphtalate (PET), destinées à la fabrication par soufflage ou étirage-soufflage de récipients tels que des bouteilles, flacons ou analogues, ledit chauffage consistant en une irradiations des préformes par un rayonnement infrarouge émis par au moins une source extérieure aux préformes pour chauffer celles-ci sensiblement transversalement à leur axe longitudinal, ledit rayonnement infrarouge (4) comprenant une première bande ($B_1$) de longueurs d'onde qui est absorbée par la matière plastique constitutive de la paroi (2) des préformes (1) et une seconde bande ($B_2$), distincte de la première bande ($B_1$), de longueurs d'onde qui n'est pas absorbée par la matière plastique et qui parvient dans le volume intérieur des préformes, caractérisé

   - en ce que, dans le volume intérieur des préformes, on modifie les longueurs d'onde, situées dans la seconde bande ($B_2$), du rayonnement infrarouge (12) qui parvient dans ledit volume intérieur pour le transformer en rayonnement (13) ayant des longueurs d'onde comprises dans la première bande ($B_1$),
   - en ce qu'on réémet le rayonnement infrarouge (13) à longueurs d'onde modifiées en direction de la paroi (2) de la préforme (1),
   - et en ce que ledit rayonnement infrarouge (13) à longueurs d'onde modifiées, étant absorbé par la matière plastique constitutive de la paroi (2) de la préforme au voisinage de la surface interne (8) de celle-ci, chauffe la matière plastique au voisinage de ladite face interne (8) de manière telle que la température $T_i$ de la face interne (8) de la paroi (2) de la préforme soit supérieure à la température $T_e$ de la face externe (10) de ladite paroi (2).

2. Procédé selon la revendication 1, caractérisé en ce que la modification des longueurs d'onde du rayonnement parvenant dans le volume intérieur des préformes est obtenue en introduisant dans ledit volume intérieur un noyau ayant une surface traitée laissant subsister avec la paroi interne de la préforme un intervalle tel que la température $T_i$ de ladite paroi interne de la préforme obtenue par l'échauffement de la matière plastique ayant absorbé le rayonnement infrarouge réémis par le noyau avec des longueurs d'onde modifiées soit supérieure à la température $T_e$ de la surface externe de la paroi.

3. Procédé selon la revendication 2, le profil en température de la paroi des préformes n'étant pas uniforme longitudinalement et/ou angulairement (en tournant autour de l'axe de la préforme), caractérisé en ce que ce profil de température non uniforme est obtenu en prévoyant un intervalle non régulier entre le noyau et la surface interne de la paroi de la préforme.

4. Procédé selon la revendication 2 ou 3, le profil en température de la paroi des préformes n'étant pas uniforme longitudinalement et/ou angulairement (en tournant autour de l'axe de la préforme), caractérisé en ce que ce profil de température non uniforme est obtenu en prévoyant un traitement de surface non régulier du noyau.

5. Procédé selon la revendication 4, caractérisé en ce que le noyau a une surface présentant une brillance et/ou une couleur non régulière.

6. Installation pour le chauffage de préformes (1) à paroi (2) relativement épaisse en matière plastique, notamment en polyéthylènetéréphtalate (PET), destinées à la fabrication par soufflage ou étirage-soufflage de récipients tels que des bouteilles, flacons ou analogues, ladite installation comportant des moyens de chauffage incluant au moins une source (4) de rayonnement infrarouge située extérieurement aux préformes (1) pour chauffer celles-ci sensiblement transversalement à leur axe longitudinal, ledit rayonnement infrarouge comprenant une première bande (B₁) de longueurs d'onde qui est absorbée par la matière plastique constitutive de la paroi (2) des préformes et une seconde bande (B₂), distincte de la première bande (B₁), de longueurs d'onde qui n'est pas absorbée par la matière plastique et qui parvient dans le volume intérieur des préformes, caractérisée en ce qu'elle comporte :

- des moyens convertisseurs de longueurs d'onde de rayonnements infrarouges disposés à l'intérieur des préformes et agencés pour convertir le rayonnement infrarouge (12) ayant des longueurs d'onde comprises dans la seconde bande (B₂) en un rayonnement infrarouge (13) ayant des longueurs d'onde comprises dans la première bande (B₁), et
- des moyens réémetteurs pour réémettre ledit rayonnement infrarouge (13) à longueurs d'onde modifiées en direction de la paroi (2) des préformes,
- ces moyens convertisseurs et réémetteurs étant en outre agencés de manière telle que la température $T_i$ de la face interne (8) de la paroi (2) des préformes soit supérieure à la température de la face externe (10) de ladite paroi (2).

7. Installation selon la revendication 6, caractérisée en ce que les moyens convertisseurs des longueurs d'onde du rayonnement infrarouge à l'intérieur des préformes et les moyens réémetteurs du rayonnement à longueurs d'onde modifiées sont mutuellement combinés et comprennent un noyau (6) introduit dans chaque préforme (1) et ayant une surface (7) traitée, et en laissant subsister avec la surface interne (8) de la paroi (2) de la préforme un espace (e) tel que la température $T_i$ de la face interne (8) de la paroi (2) obtenue par échauffement de la matière plastique ayant absorbé le rayonnement infrarouge (13) réémis par le noyau (6) avec des longueurs d'onde modifiées, soit supérieure à la température $T_e$ de la face externe (10) de la paroi (2).

8. Installation selon la revendication 7, caractérisé en ce que la surface (7) du noyau (6) n'est pas en tout point parallèle à la surface interne (8) de la paroi (2) de la préforme de manière telle que l'espace (e) existant entre lesdites surfaces (7, 8) soit irrégulier longitudinalement et/ou angulairement (en tournant autour de l'axe de la préforme).

9. Installation selon la revendication 7 ou 8, caractérisée en ce que la surface (7) du noyau (6) présente un traitement de surface non régulier longitudinalement et/ou angulairement (en tournant autour de son axe longitudinal).

10. Installation selon la revendication 9, caractérisée en ce que le noyau (6) a une surface (7) présentant une brillance et/ou une couleur non régulière.

11. Installation selon l'une quelconque des revendications 7 à 10, dans laquelle la préforme (1) subit une rotation axiale (5) devant les moyens de chauffage à rayonnement infrarouge (4), caractérisée en ce que le noyau (6) reste fixe tandis que la préforme (1) tourne sur elle-même.

12. Installation selon l'une quelconque des revendications 7 à 10, dans laquelle la préforme (1) subit une rotation axiale (5) devant les moyens de chauffage à rayonnement infrarouge (4), caractérisée en ce que le noyau (6) est agencé pour tourner sur lui-même (14) en synchronisme avec la préforme (1).

**Claims**

1. A method for heating preforms having a relatively thick wall made of plastic material, especially polyethylene terephthalate (PET), provided for the manufacture by blow moulding or stretch-blow moulding of receptacles such as bottles, flasks or the like, said heating consisting of irradiating the preforms with infrared radiation generated by at least one source outside of the preforms to heat the preforms transverse to their longitudinal axes, said infrared radiation (4) including a first wavelength band (B₁) which is absorbed by the plastic material constituting of the wall (2) of the preforms (1) and a second wavelength band (B₂), distinct from the first band (B₁), which is not absorbed by the plastic material and which penetrates inside the internal volume of the preforms, characterized by that :

- inside the internal volume of the preforms, the wavelengths, located in the second band (B₂), of the infrared radiation (12) which reaches inside said internal volume is modified so as to transform said radiation into radiation (13) with wavelengths included in the first band (B₁),
- the infrared radiation (13) with modified wavelengths is reemitted back towards the walls (2) of the preforms (1),
- and said infrared radiation (13) with modified wavelengths, being absorbed by the plastic material constituting of the walls (2) of the preform in the vicinity of its internal surface (8), heats the plastic material in the vicinity of said internal surface (8) so that the temperature $T_i$ of the internal face (8) of the wall (2) of the preform is greater than the temperature $T_e$ of the external face (10) of said wall (2).

2. A method according to claim 1, characterized by that the modification of the wavelengths of the radiation incoming into the internal volume of preforms is implemented by introducing in said internal volume a core having a treated surface that defines such a gap ($\underline{e}$) with the internal wall of the preform that the temperature $T_i$ of said internal face of the preform due to the heating of the plastic material which has absorbed the infrared radiation reemitted by the core with modified wavelengths is greater than the temperature $T_e$ of the external face of the wall.

3. A method according to claim 2, wherein the temperature profile of the wall of the preforms is non-uniform longitudinally and/or angularly (with rotation around the preform axis), characterized by that said non-uniform temperature profile is obtained by providing an irregular gap between the core and the internal wall of the preform.

4. A method according to claim 2 or 3, wherein the temperature profile of the wall of the preforms is non-uniform longitudinally and/or angularly (with rotation around the preform axis), characterized in that said non-uniform temperature profile is obtained by using a core having an irregular surface treatment.

5. A method according to claim 4, characterized in that the core has a surface which exhibits an irregular color and/or brilliance.

6. An installation for heating preforms (1) having a relatively thick wall (2) made of plastic material, especially polyethylene terephtalate (PET), provided for the manufacture by blow moulding or stretch-blow moulding of receptacles such as bottles, flasks or the like, said installation comprising heating means including at least one source (4) of infrared radiation located outside of the preforms (1) to heat the preforms transverse to their longitudinal axes, said infrared radiation including a first wavelength band ($B_1$) which is absorbed by the plastic material constituting of the wall (2) of the preforms and a second wavelength band ($B_2$), distinct from the first band ($B_1$), which is not absorbed by the plastic material and which penetrates inside the internal volume of the preforms, characterized by comprising :
- infrared radiation converting means disposed inside the preforms and adapted for converting the infrared radiation (12) having wavelengths included in the second band ($B_2$) into an infrared radiation (13) having wavelengths included in the first band ($B_1$), and
- reemitting means for reemitting said infrared radiation (13) with modified wavelengths towards the wall (2) of the preforms,
- said converting means and reemitting means being furthermore adapted such that the temperature $T_i$ of the internal face (8) of the wall (2) of the preforms is greater than the temperature of the external face (10) of said wall (2).

7. An installation according to claim 6, characterized by that the converting means for converting infrared radiation wavelengths inside preforms and the reemitting means for reemitting radiation with modified wavelengths are mutually combined and comprise a core (6) introduced inside each preform (1) and having a treated surface (7), and defining a gap ($\underline{e}$) with the internal face (8) of the wall (2) of the preform such that the temperature $T_i$ of the internal face (8) of the wall (2) due to the heating of the plastic material having absorbed the infrared radiation reemitted by the core (6) with modified wavelengths is greater than temperature $T_e$ of the external face (10) of the wall (2).

8. An installation according to claim 7, characterized in that the surface (7) of the core (6) is not anywhere parallel to the internal surface (8) of the wall (2) of the preform such that the gap ($\underline{e}$) between said surfaces (7, 8) is irregular longitudinally and/ou axially (with rotation around the preform axis).

9. Installation according to claim 7 or 8, characterized in that the surface (7) of the core (6) has a surface treatment which is irregular axially and/or angulary (with rotation around its longitudinal axis).

10. An installation according to claim 9, characterized in that the core (6) has a surface (7) with an irregular brilliant and/or color.

11. An installation according to anyone of claims 7 to 10, wherein the preform (1) is axially rotated (5) in front of infrared radiation heating means (4), characterized by that the core (6) remains static while the preform (1) is rotated around its axis.

12. An installation according to anyone of claims 7 to 10, wherein the preform (1) is axially rotated (5) in front of infrared radiation heating means (4), characterized in that the core (6) is adapted to rotate around its axis (14) synchroneously with the preform (1).

**Patentansprüche**

1. Verfahren zum Erwärmen von Vorformlingen relativ dicker Wandung aus Kunststoff, insbesondere aus Polyethylenterephthalat (PET), die zur Herstellung mittels Blasformen oder Zieh-Blasformen von Behältern bestimmt sind, beispielsweise Flaschen, Flakons oder dergleichen, wobei die Erwärmung eine Bestrahlung der Vorformlinge mittels Infrarotstrahlung umfaßt, welche von wenigstens einer äußeren Quelle auf die Vorformlinge zur Erwärmung derselben im wesentlichen orthogonal zu deren Längsachse emittiert wird, wobei die Infrarotstrahlung (4) ein erstes Wellenlängenband ($B_1$) umfaßt, das von dem die Wandung (2) der Vorformlinge (1) bildenden Kunststoff absorbiert wird, sowie ein von dem ersten Band ($B_1$) verschiedenes, zweites Wellenlängenband ($B_2$), das von dem Kunststoff nicht absorbiert wird und in das Innenvolumen der Vorformlinge gelangt,
**dadurch gekennzeichnet,**
- daß im Innenvolumen der Vorformlinge die in dem zweiten Band ($B_2$) gelegenen Wellenlängen der in das Innenvolumen gelangenden Infrarotstrahlung (12) geändert werden, um sie in Strahlung (13) mit in dem ersten Band ($B_1$) enthaltenen Wellenlängen zu transformieren,
- daß die Infrarotstrahlung (13) geänderter Wellenlängen in Richtung der Wandung (2) des Vorformlings (1) reemittiert wird,
- daß die Infrarotstrahlung (13) geänderter Wellenlängen, die von dem die Wandung (2) des Vorformlings bildenden Kunststoff in der Nähe der Innenfläche (8) desselben absorbiert wird, den Kunststoff in der Nähe dieser Innenfläche (8) derart erwärmt, daß die Temperatur ($T_i$) der Innenfläche (8) der Wandung (2) des Vorformlings oberhalb der Temperatur ($T_e$) der Außenfläche (10) dieser Wandung (2) liegt.

2. Verfahren nach Anspruch 1, **dadurch gekennzeichnet**, daß die Wellenlängenänderung der in das Innenvolumen der Vorformlinge gelangenden Strahlung durch Einführen eines Kerns in dieses Innenvolumen erzielt wird, wobei der Kern eine behandelte Oberfläche aufweist, die zu der Innenwandung des Vorformlings ein derartiges Intervall beläßt, daß die Temperatur $T_i$ dieser Innenwandung des Vorformlings, welche durch Erwärmung des Kunststoffs nach Absorption der von dem Kern reemittierten Infrarotstrahlung mit geänderten Wellenlängen erhalten wird, oberhalb der Temperatur $T_e$ der Außenfläche der Wandung liegt.

3. Verfahren nach Anspruch 2, wobei das Temperaturprofil der Wandung der Vorformlinge in Längsrichtung und/oder Winkelrichtung (bei Drehung um die Achse des Vorformlings) nicht gleichförmig ist, **dadurch gekennzeichnet**, daß dieses nicht gleichförmige Temperaturprofil durch Vorsehen eines nicht regelmäßigen Intervalls zwischen dem Kern und der Innenfläche der Wandung des Vorformlings erhalten wird.

4. Verfahren nach Anspruch 2 oder 3, wobei das Temperaturprofil der Wandung der Vorformlinge in Längsrichtung und/oder Winkelrichtung (bei Drehung um die Achse des Vorformlings) nicht gleichförmig ist, **dadurch gekennzeichnet**, daß dieses nicht gleichförmige Temperaturprofil durch Vorsehen einer nicht regelmäßigen Oberflächenbehandlung des Kerns erhalten wird.

5. Verfahren nach Anspruch 4, **dadurch gekennzeichnet**, daß der Kern eine Oberfläche aufweist, die nicht regelmäßigen Glanz und/oder nicht regelmäßige Farbe aufweist.

6. Vorrichtung zum Erwärmen von Vorformlingen (1) relativ dicker Wandung (2) aus Kunststoff, insbesondere aus Polyethylenterephthalat (PET), die zur Herstellung mittels Blasformen oder Zieh-Blasformen von Behältern bestimmt sind, beispielsweise Flaschen, Flakons oder dergleichen, wobei die Einrichtung Erwärmungsmittel umfaßt, welche wenigstens eine außerhalb der Vorformlinge (1) zur Erwärmung derselben im wesentlichen orthogonal zu deren Längsachse angeordnete Infrarotstrahlungsquelle (4) umfaßt, wobei die Infrarotstrahlung

ein erstes Wellenlängenband ($B_1$) umfaßt, das von dem die Wandung (2) der Vorformlinge bildenden Kunststoff absorbiert wird, sowie ein von dem ersten Band ($B_1$) verschiedenes zweites Wellenlängenband ($B_2$), das von dem Kunststoff nicht absorbiert wird und in das Innenvolumen der Vorformlinge gelangt, **dadurch gekennzeichnet**, daß sie umfaßt:

- Infrarotwellenlängen-Wandlermittel, die im Innenraum der Vorformlinge angeordnet sind und zum Wandeln der Infrarotstrahlung (12) mit in dem zweiten Band enthaltenen Wellenlängen in Infrarotstrahlung (13) mit in dem ersten Band ($B_1$) enthaltenen Wellenlängen ausgebildet sind, und
- Reemittierungsmittel zum Reemittieren dieser Infrarotstrahlung (13) geänderter Wellenlängen in Richtung der Wandung (2) der Vorformlinge,
- wobei diese Wandler- und Reemittierungsmittel darüber hinaus derart ausgebildet sind, daß die Temperatur $T_i$ der Innenfläche (8) der Wandung (2) der Vorformlinge oberhalb der Temperatur der Außenfläche (10) dieser Wandung (2) liegt.

7. Vorrichtung nach Anspruch 6, **dadurch gekennzeichnet**, daß die Infrarotwellenlängen-Wandlermittel im Inneren der Vorformlinge und die Reemittierungsmittel zum Reemittieren der Strahlung geänderter Wellenlänge miteinander kombiniert sind und einen Kern (6) umfassen, der in jeden Vorformling (1) eingeführt ist und eine behandelte Oberfläche (7) aufweist und zu der Innenfläche (8) der Wandung (2) des Vorformlings einen derartigen Abstands (e) beläßt, daß die durch Erwärmung des Kunststoffs nach Absorption der von dem Kern (6) mit geänderten Wellenlängen reemittierten Infrarotstrahlung (13) erhaltenen Temperatur $T_i$ der Innenfläche (8) der Wandung (2) oberhalb der Temperatur $T_e$ der Außenfläche (10) der Wandung (2) liegt.

8. Vorrichtung nach Anspruch 7, **dadurch gekennzeichnet**, daß die Oberfläche (7) des Kerns (6) nicht an allen Punkten parallel zur Innenfläche (8) der Wandung (2) des Vorformlings verläuft, so daß der zwischen diesen Flächen (7, 8) vorhandene Abstand (e) in Längsrichtung und/oder Winkelrichtung (bei Drehung um die Achse des Vorformlings) nicht regelmäßig ist.

9. Vorrichtung nach Anspruch 7 oder 8, **dadurch gekennzeichnet**, daß die Oberfläche (7) des Kerns (6) eine in Längsrichtung und/oder Winkelrichtung (bei Drehung um seine Längsachse) nicht regelmäßige Oberflächenbehandlung aufweist.

10. Vorrichtung nach Anspruch 9, **dadurch gekennzeichnet**, daß der Kern (6) eine Oberfläche (7) aufweist, die nicht regelmäßigen Glanz und/oder nicht regelmäßige Farbe aufweist.

11. Vorrichtung nach einem der Ansprüche 7 bis 10, bei welcher der Vorformling (1) einer axialen Drehung (5) vor den Infrarotstrahlungs-Erwärmungsmitteln (4) unterworfen wird, **dadurch gekennzeichnet**, daß der Kern (6) fest bleibt, während sich der Vorformling (1) um sich selbst dreht.

12. Vorrichtung nach einem der Ansprüche 7 bis 10, bei welcher der Vorformling (1) einer axialen Drehung (5) vor den Infrarotstrahlungs-Erwärmungsmitteln (4) unterworfen wird, **dadurch gekennzeichnet**, daß der Kern (6) zur mit dem Vorformling (1) synchronen Drehung um sich selbst (14) ausgebildet ist.

## FIG.1.

## FIG.2.

FIG. 3.

FIG. 4.

# FIG.5.

# FIG.6A.

# FIG.6B.

# FIG.6C.